(19) Europäisches Patentamt
European Patent Office
Office européen des brevets

(11) EP 4 503 198 A1

(12) **EUROPEAN PATENT APPLICATION**
published in accordance with Art. 153(4) EPC

(43) Date of publication:
**05.02.2025 Bulletin 2025/06**

(21) Application number: **23774903.1**

(22) Date of filing: **20.03.2023**

(51) International Patent Classification (IPC):
***H01M 4/62*** *(2006.01)* ***H01M 4/525*** *(2010.01)*

(52) Cooperative Patent Classification (CPC):
**H01M 4/525; H01M 4/62;** Y02E 60/10

(86) International application number:
**PCT/JP2023/011009**

(87) International publication number:
**WO 2023/182308 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022049941**

(71) Applicant: **Kureha Corporation**
**Chuo-ku**
**Tokyo 103-8552 (JP)**

(72) Inventors:
- **ASHIDA, Kana**
  **Tokyo 103-8552 (JP)**
- **OKADA, Kayoko**
  **Tokyo 103-8552 (JP)**
- **WATANABE, Keisuke**
  **Tokyo 103-8552 (JP)**

(74) Representative: **Zimmermann & Partner Patentanwälte mbB**
**P.O. Box 330 920**
**80069 München (DE)**

# (54) BINDER, ELECTRODE MIXTURE, ELECTRODE, AND LITHIUM ION SECONDARY BATTERY

(57) An object is to provide a binder that hardly causes gelation even when mixed with a positive electrode active material containing nickel, and has sufficient adhesiveness in a small amount. The binder for solving the above-described issues contains a vinylidene fluoride polymer, the vinylidene fluoride polymer includes a structural unit derived from vinylidene fluoride and two or more kinds of structural units having a carboxy group, and a viscosity ratio of slurry determined by a specific method is 100% or less.



Processed by Luminess, 75001 PARIS (FR)

## Description

### [TECHNICAL FIELD]

The present invention relates to a binder for a positive electrode of a lithium-ion secondary battery, an electrode mixture using the binder, an electrode, and a lithium-ion secondary battery.

### [BACKGROUND ART]

In the known art, it has been widely studied to utilize a nonaqueous electrolyte secondary battery such as a lithium-ion secondary battery as an on-vehicle battery. An on-vehicle secondary battery is required to have a high capacity. Thus, it is considered to be important to reduce an amount of a binder in each electrode of the lithium-ion secondary battery and increase a ratio of an active material for increasing the capacity. In general, polyvinylidene fluoride (PVDF) is used as a binder for a positive electrode of the lithium-ion secondary battery, and various studies have been conducted in order to further enhance adhesiveness of the binder.

For example, Patent Document 1 discloses a vinylidene fluoride polymer having better adhesiveness to a metal foil than a known vinylidene fluoride polymer.

[Citation List]

[Patent Document]

Patent Document 1: WO 2012/090876

### [SUMMARY OF INVENTION]

[Technical Problem]

However, even the vinylidene fluoride polymer described in Patent Document 1 has insufficient adhesiveness at times, and further improvement is required. In addition, when a positive electrode active material is combined with a known vinylidene fluoride polymer, there is an issue that the electrode mixture is easily gelled. In recent years, in order to increase the capacity of a battery, it has been studied to use a ternary compound having a high nickel ratio as the positive electrode active material; however, when such a positive electrode active material is used, the progress of gelation is further promoted.

Thus, an object of the present invention is to provide a binder which hardly causes gelation of an electrode mixture even when mixed with a positive electrode active material and has sufficient adhesiveness in a small amount, an electrode mixture including the binder, an electrode, and a battery.

[Solution to Problem]

The present invention provides a binder for a positive electrode for a lithium-ion secondary battery, the binder containing a vinylidene fluoride polymer, the vinylidene fluoride polymer including a structural unit derived from vinylidene fluoride and two or more kinds of structural units having a carboxy group, where a slurry has a viscosity ratio of 100% or less as determined by the following method:

[Method of determining viscosity ratio of slurry]

(1) Preparing a slurry consisting of an electrode active material NCA811, carbon black, the vinylidene fluoride polymer in the binder, and N-methyl-2-pyrrolidone, the slurry having a mass ratio of the electrode active material, the carbon black, and the vinylidene fluoride polymer in the binder of 100:2:2 and a solid content concentration of 75 mass%.
(2) Measuring a viscosity of the slurry using an E-type viscometer at 25°C and a shear rate of 2 $s^{-1}$.
(3) Storing the slurry at 25°C under a nitrogen atmosphere for 2 weeks.
(4) Measuring the viscosity of the slurry after storage using an E-type viscometer at 25°C and a shear rate of 2 $s^{-1}$.
(5) Calculating a viscosity ratio of the slurry based on the following equation:

Viscosity ratio (%) = (slurry viscosity after storage)/(slurry viscosity immediately after preparation) × 100

The present invention also provides an electrode mixture containing the binder and a positive electrode active material.

The present invention provides an electrode in which an electrode mixture layer including the electrode mixture is provided on a current collector. The present invention also provides a lithium-ion secondary battery including the electrode.

[Advantageous Effects of Invention]

The binder of the present invention hardly causes gelation even when mixed with a positive electrode active material containing nickel, and has sufficient adhesiveness in a small amount. Therefore, it is possible to provide an electrode mixture that can be stably used over a long period of time, and it is also possible to provide a lithium-ion secondary battery having a high capacity and an electrode used for the lithium-ion secondary battery.

[Description of Embodiments]

1. Binder

As described above, various vinylidene fluoride polymers have been used as a binder for a positive electrode for a lithium-ion secondary battery; however, it has been required to further improve adhesiveness thereof. When the vinylidene fluoride polymer is mixed with a positive electrode active material, particularly a positive electrode active material having a high nickel ratio, there is an issue that gelation is likely to occur.

The reason for this is thought to be as follows. The positive electrode active material contains a base, and the positive electrode active material having a high nickel ratio contains a particularly large amount of base. Thus, when vinylidene fluoride comes into contact with the positive electrode active material, deterioration of the binder is promoted by the base. The deteriorated binder forms a crosslinked structure in a slurry-like electrode mixture (hereinafter, also referred to as an electrode mixture slurry), so that the electrode mixture slurry is gelled.

Meanwhile, the binder of the present invention contains a vinylidene fluoride polymer including a structural unit derived from vinylidene fluoride and two or more kinds of structural units having a carboxy group. A viscosity ratio of the slurry containing the vinylidene fluoride polymer is 100% or less as measured by a specific method described later. Here, a monomer copolymerized with vinylidene fluoride has different copolymerizability with vinylidene fluoride for each structure. Thus, a vinylidene fluoride polymer obtained by copolymerizing two or more kinds of different monomers has a complicated structural unit arrangement different from that of a polymer using only one kind of monomer and a polymer obtained by blending two kinds of polymers using only one kind of monomer. Since this complicated structural unit arrangement suppresses deterioration of the binder, it is considered that the electrode mixture is hardly gelled even when the vinylidene fluoride polymer and the positive electrode active material are mixed. In addition, the vinylidene fluoride polymer includes a carboxy group derived from a structural unit having a carboxy group. The carboxy group can bond to a polar group present on a surface of an active material or a current collector. Therefore, even a small amount of the binder containing the vinylidene fluoride polymer has high adhesive strength to the active material and to the current collector. That is, the binder is very useful as a material for an electrode mixture layer of the lithium-ion secondary battery. The vinylidene fluoride polymer and other components that are contained in the binder will be described below. The binder may contain only one, or two or more kinds of the following vinylidene fluoride polymers.

• Vinylidene fluoride polymer

The vinylidene fluoride polymer includes a structural unit derived from vinylidene fluoride and two or more kinds of structural units having the following carboxy group. The vinylidene fluoride polymer may include only two kinds of structural having the following carboxy group, and preferably include three or more kinds of structural units from the viewpoint of suppressing gelation.

The structural unit having a carboxy group may be, for example, a structural unit represented by Formula (1).

[Chem. 1]

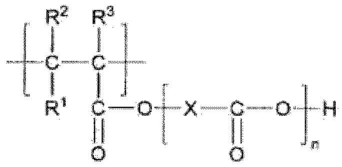

... (1)

In General Formula (1) stated above, $R^1$ to $R^3$ each independently represent a hydrogen atom, a fluorine atom, a chlorine atom, or an alkyl group having 1 or more and 4 or less carbon atoms, in which the alkyl group may have a substituent. The alkyl group may be linear or branched. Specific examples of the alkyl group having 1 or more and 4 or less carbon atoms include a methyl group, an ethyl group, a propyl group, and a butyl group. Examples of the substituent for the alkyl group include a halogen atom. However, from the viewpoint that steric hindrance hardly occurs during polymerization with vinylidene fluoride, the alkyl group preferably does not have a substituent. $R^1$ to $R^3$ are more preferably a hydrogen atom or a methyl group, and particularly preferably a hydrogen atom.

Meanwhile, X in General Formula (1) stated above represents an alkylene group having 1 or more and 4 or less carbon atoms, in which the alkylene group may have a substituent. The alkylene group having 1 or more and 4 or less carbon atoms may be linear or branched. Specific examples of the alkylene group include a methylene group, an ethylene group, a propylene group, and a butylene group. Examples of the substituent include a halogen atom. From the viewpoint that inhibition of adhesion action of the carboxy group due to steric hindrance hardly occurs, the alkyl chain preferably does not have a substituent. In the two or more kinds of structural units having the carboxy group that constitute a vinylidene fluoride polymer, when either one or two or more kinds of the structural units are represented by General Formula (1), X in at least one structural unit represented by General Formula (1) is more preferably a methylene group or an ethylene group from the viewpoint of suppressing gelation of the electrode mixture. When the vinylidene fluoride polymer includes two or more kinds of structural units represented by General Formula (1), X in all the structural units represented by General Formula (1) is particularly preferably a methylene group or an ethylene group.

In addition, n in General Formula (1) described above is an integer of 0 or more and 5 or less, and more preferably 0 or 1. Particularly, in the two or more kinds of structural units having the carboxy group that constitute a vinylidene fluoride polymer, when either one or two or more kinds of the structural units are represented by General Formula (1), n in at least one structural unit represented by General Formula (1) is particularly preferably 0 or 1 from the viewpoint of suppressing gelation of the electrode mixture (from the viewpoint of satisfying the viscosity ratio of the slurry described later). In addition, n in at least one structural unit represented by General Formula (1) is particularly preferably 1.

Here, the molecular weight of the structural unit having a carboxy group described above is preferably 70 or more and 600 or less, more preferably 100 or more and 400 or less, still more preferably 100 or more and 250 or less. When the molecular weight is in the range described above, a high adhesive force can be maintained, and gelation can be suppressed.

The structural unit having a carboxy group described above can be, for example, a structural unit derived from methacrylic acid, acrylic acid, carboxymethyl methacrylate, carboxymethyl acrylate, carboxyethyl methacrylate, carboxyethyl acrylate, carboxypropyl methacrylate, carboxypropyl acrylate, carboxybutyl methacrylate, carboxybutyl acrylate, 2-((2-(acryloyloxy) ethanoyl)oxy)ethanoic acid, 2-(((2-(acryloyloxy) ethanoyl)oxy) ethanoyl)oxy)ethanoic acid, 3-((3-(acryloyloxy) propanoyl)oxy)propanoic acid, 3-((((3-(acryloyloxy) propanoyl)oxy) propanoyl)oxy)propanoic acid, or the like.

Among them, a structural unit derived from carboxymethyl methacrylate, carboxymethyl acrylate, carboxyethyl methacrylate, carboxyethyl acrylate, carboxypropyl methacrylate, carboxypropyl acrylate, carboxybutyl methacrylate, carboxybutyl acrylate, or the like can be preferably used.

A proportion of the structural unit having a carboxy group described above in the vinylidene fluoride polymer is not particularly limited. However, a total amount of the structural unit having the above-described carboxy group is preferably 0.1 mass% or more and 10 mass% or less, more preferably 0.5 mass% or more and 5 mass% or less, still more preferably 0.5 mass% or more and 2 mass% or less with respect to the total amount of the structural unit included in the vinylidene fluoride polymer. When a ratio of the total amount of the structural unit having a carboxy group in the vinylidene fluoride polymer is 10 mass% or less, crystallinity of the vinylidene fluoride polymer increases, and the adhesive strength between the binder (vinylidene fluoride polymer) and the active material or the current collector tends to increase. On the other hand, when the ratio of the total amount of the structural unit having a carboxy group described above is 0.1 mass% or more, a complicated structural unit arrangement is sufficiently formed, and deterioration of the binder is suppressed, so that gelation hardly occurs when the binder and the positive electrode active material are mixed, and the viscosity ratio in the form of a slurry described later tends to fall within a desired range.

The amount of each of the structural units having a carboxy group is preferably 10 mass% or more, and more

preferably 20 mass% or more, with respect to the total amount of the structural unit having a carboxy group. When the proportion of each of the structural units having a carboxy group is 10 mass% or more, gelation is easily suppressed when the positive electrode active material containing nickel is mixed as described above. The total amount of the structural unit having a carboxy group and the amount of each structural unit can be specified by analysis by $^{19}$F-NMR, $^{1}$H-NMR, or the like.

Meanwhile, the amount of the structural unit derived from vinylidene fluoride with respect to the amount of all structural units in the vinylidene fluoride polymer is preferably 90 mass% or more and 99.9 mass% or less, more preferably 95 mass% or more and 99.5 mass% or less, and still more preferably 98 mass% or more and 99.5 mass% or less. When the amount of the structural unit derived from vinylidene fluoride is 90 mass% or more, physical properties unique to vinylidene fluoride tend to be achieved. On the other hand, when the amount of the structural unit derived from vinylidene fluoride is 99.9 mass% or less, the total amount of the structural unit having a carboxy group becomes relatively sufficient, and the adhesive strength between the binder (vinylidene fluoride polymer) and the active material and/or the current collector increases. The amount of the structural unit derived from vinylidene fluoride in the vinylidene fluoride polymer can be determined by, for example, the $^{19}$F-NMR analysis or the like.

The vinylidene fluoride polymer may include a structural unit derived from vinylidene fluoride and a structural unit (hereinafter, also referred to as "structural unit derived from other compounds") other than the structural unit having a carboxy group as long as the object and effect of the present invention are not impaired. The vinylidene fluoride polymer may contain one kind of structural unit derived from the additional compound, or may contain two or more kinds of structural units derived from the additional compound(s). However, the total amount of the structural unit derived from vinylidene fluoride and the structural unit having a carboxy group with respect to all the structural units of the vinylidene fluoride polymer is preferably 90 mass% or more, and more preferably 95 mass% or more.

Examples of other compounds include fluorine-based monomers and hydrocarbon-based monomers such as ethylene and propylene that are copolymerizable with vinylidene fluoride, and monomers that are copolymerizable with General Formula (1). Examples of fluorine-based monomers that are copolymerizable with vinylidene fluoride include vinyl fluoride, trifluoroethylene, tetrafluoroethylene, chlorotrifluoroethylene, hexafluoropropylene, fluoroalkyl vinyl ether, and perfluoroalkyl vinyl ethers typified by perfluoromethyl vinyl ether. Examples of monomers that are copolymerizable with General Formula (1) include alkyl (meth)acrylate compounds typified by methyl(meth)acrylate.

Here, the vinylidene fluoride polymer may be obtained by block polymerization of vinylidene fluoride and two or more precursors of the structural unit having a carboxy group described above, and is more preferably obtained by random polymerization. When the vinylidene fluoride polymer is prepared by random polymerization, uniformity of a polymer chain is improved, and the adhesiveness exhibited by the structural unit having a carboxy group described above is improved.

A melting point of the vinylidene fluoride polymer is preferably 160°C or higher and more preferably 165°C or higher. When the melting point of the vinylidene fluoride polymer is 160°C or higher, swelling is less likely to be caused by an electrolyte, and the resulting lithium-ion secondary battery tends to have good performances. The melting point of the vinylidene fluoride polymer can be determined by calorimetry using the differential scanning calorimeter (DSC). Specifically, the vinylidene fluoride polymer is heated from 30°C to 230°C at 10°C/min (the first heating), cooled from 230°C to 30°C at 10°C/min (the first cooling), and further heated from 30°C to 230°C at 10°C/min (the second heating). A melting peak is then specified by DSC. In the present description, the maximum melting peak temperature observed in the second heating is specified as a melting point of the vinylidene fluoride polymer.

An inherent viscosity of the vinylidene fluoride polymer is preferably 0.5 dL/g or more and 5.0 dL/g or less, more preferably 1.0 dL/g or more and 4.0 dL/g or less, and most preferably 1.0 dL/g or more and 3.5 dL/g or less. When the inherent viscosity is 0.5 dL/g or greater, the adhesive strength between the binder (vinylidene fluoride polymer) and an active material and/or a current collector is enhanced. On the other hand, when the inherent viscosity is 5.0 or less, a slurry viscosity does not become excessively high when an electrode slurry is prepared, and excellent workability is achieved. The inherent viscosity ($\eta_i$) is represented by a logarithmic viscosity. First, the viscosity is measured by dissolving 80 mg of the vinylidene fluoride polymer in 20 mL of N,N-dimethylformamide, and using an Ubbelohde viscometer in a 30°C thermostatic bath. Then, based on the obtained value, calculation is performed by using the following equation.

$$\eta_i = (1/C) \cdot \ln(\eta/\eta_0)$$

In the equation, $\eta$ is a viscosity of the solution, $\eta_0$ is a viscosity of N,N-dimethylformamide alone, which is a solvent, C is a concentration of the vinylidene fluoride polymer in the solution, that is, 0.4 g/dL.

Here, the vinylidene fluoride polymer can be prepared by subjecting vinylidene fluoride, two or more kinds of precursors of the structural unit represented by General Formula (1) stated above, and, optionally, an additional compound to copolymerization by a known method. Examples of the method for copolymerizing them include suspension polymerization, emulsion polymerization, and solution polymerization. However, from the viewpoint of ease in obtaining a binder having a high adhesive strength and from the viewpoint of less impurity, suspension polymerization is preferred.

• Nonaqueous solvent

The binder may be made only with the vinylidene fluoride polymer described above but may contain a nonaqueous solvent, as necessary.

When the binder contains a nonaqueous solvent, the vinylidene fluoride polymer can be dissolved or dispersed, and the binder can be made in a liquid state.

Examples of the nonaqueous solvent include a solvent having polarity (polar solvent). Examples of the polar solvent include amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl -3-methylimidazolium bis(trifluoromethylsulfonyl) imide; lactones, such as γ-butyrolactone and δ-butyrolactone; and sulfoxide-sulfone compounds, such as dimethyl sulfoxide and sulfolane. The binder may contain one nonaqueous solvent only or two or more nonaqueous solvents.

The amount of the nonaqueous solvent in the binder is preferably 400 parts by mass or greater and 5000 parts by mass or less, and more preferably 500 parts by mass or greater and 5000 parts by mass or less, with respect to 100 parts by mass of the vinylidene fluoride polymer. When the amount of the nonaqueous solvent in the binder is in the range described above, the vinylidene fluoride polymer can be uniformly dispersed or dissolved in the nonaqueous solvent.

• Other components

The binder may further contain an additional resin, such as an acrylic resin; a filler, such as an inorganic filler; an additive of various types; and/or the like, in the range that does not impair the object and effect of the present invention.

· Viscosity ratio when vinylidene fluoride polymer in binder is made into slurry

In the binder, the viscosity ratio of the slurry determined by the following method is 100% or less, preferably 80% or less, and more preferably 50% or less. When the viscosity ratio is 100% or less, the electrode mixture described later becomes stable. The viscosity ratio greatly depends on the type and structure of the vinylidene fluoride polymer.

A test of the viscosity ratio is performed on only the vinylidene fluoride polymer taken out from the binder. That is, when the binder contains a nonaqueous solvent, a resin other than the vinylidene fluoride polymer, a filler, various additives, and the like, these are removed, and the following test is performed. When the binder contains a plurality of vinylidene fluoride polymers, the test is performed in a state where these polymers are mixed.

[Method of determining viscosity ratio of slurry]

(1) A slurry including only an electrode active material NCA811, carbon black, a vinylidene fluoride polymer in a binder, and N-methyl-2-pyrrolidone and having a mass ratio of the electrode active material, the carbon black, and the vinylidene fluoride polymer in the binder of 100:2:2 and a solid content concentration of 75 mass% is prepared.
(2) The viscosity of the slurry is measured at 25°C and a shear rate of 2 $s^{-1}$ using an E-type viscometer.
(3) The slurry is stored at 25°C under a nitrogen atmosphere for 2 weeks.
(4) The viscosity of the slurry after storage is measured at 25°C and a shear rate of 2 $s^{-1}$ using the E-type viscometer.
(5) The viscosity ratio of the slurry is calculated based on the following equation:

Viscosity ratio (%) = (slurry viscosity after storage)/(slurry viscosity immediately after preparation) × 100

In order to reduce a variation in the viscosity ratio of the slurry due to a material for preparing the slurry and the production conditions, it is preferable to prepare the slurry under the following materials and conditions.

(i) Water content of N-methyl-2-pyrrolidone: less than 500 ppm
(ii) Median value (D50) of average particle size of aqueous dispersion of NCA811 measured by laser diffraction/-scattering method: 8 μm to 13 μm
(iii) Specific surface area of NCA811 measured by BET 1-point method: 0.2 to 0.5 $m^2/g$
(iv) pH when NCA811 is subjected to extraction method (described in detail below) according to JIS K5101-16-2: 11.5 to 12.0
(v) Median value (D50) of average particle size of carbon black measured by electron microscope analysis: 30 nm to

50 nm

(vi) Specific surface area of carbon black measured by BET 1-point method: 50 to 70 $m^2/g$

(vii) Slurry preparation conditions: kneading performed twice by a rotation-revolution mixer according to the procedure described later.

(viii) Preparation environment of slurry: 22°C, dew temperature: -30°C to -40°C (iX) Storage environment and viscosity measurement environment of slurry: 25°C, dew temperature -30°C to -40°C

(Method of measuring pH of electrode active material)

The electrode active material (NCA811) is placed in ultrapure water in an amount 50 times the mass of the electrode active material (NCA811). Then, stirring is performed at a rotation speed of 600 rpm for 10 minutes using a magnetic stirrer. The pH of the solution is measured with a pH meter MODEL F-21 available from HORIBA, Ltd., and the measured pH is defined as the pH of NCA811.

(Method of preparing slurry)

A powder mixture of NCA811 and carbon black and a vinylidene fluoride polymer-containing solution in which a vinylidene fluoride polymer is dissolved in N-methyl-2-pyrrolidone are provided. A vinylidene fluoride polymer-containing solution is added to the powder mixture so that the solid content concentration is 81.5 mass%, and this is primarily kneaded at 2000 rpm for 2.5 minutes by a rotation/revolution mixer. After the slurry is allowed to cool to a temperature of 40°C or lower, the remaining vinylidene fluoride polymer is added and secondarily kneaded at 2000 rpm for 3 minutes by the rotation/revolution mixer.

2. Electrode mixture

The binder described above and the positive electrode active material can be mixed to obtain an electrode mixture for preparing a positive electrode of a lithium-ion secondary battery. The electrode mixture may further contain a conductive auxiliary, a solvent, other additives, and the like.

The type of the positive electrode active material is not particularly limited, and a general lithium-based positive electrode active material containing lithium can be used. Examples of the lithium-based positive electrode active material include lithium metal compounds represented by General Formula (2) described below:

$$LiM_xO_2 \ldots \qquad (2)$$

In General Formula (2), M represents at least one metal element including Ni, and the metal element other than Ni is preferably selected from the group consisting of Co, Al, Fe, Mn, Cr, and V. In addition to Ni, it is more preferable to further contain one, or two or more selected from the group consisting of Co, Mn, and Al. In the lithium metal oxide represented by Formula (2) described above, when the total of the metal elements included in M is defined as 100 mol%, Ni is contained preferably in an amount of 55 mol% or more, and more preferably in an amount of 70% or more.

In General Formula (2) stated above, $0.5 \leq x \leq 1.5$ is satisfied, and $0.7 \leq x \leq 1.3$ is more preferably satisfied.

The positive electrode active material may be a positive electrode active material obtained by applying a coating on a surface of the compound described above. Furthermore, the positive electrode active material may be a commercially available product.

Examples of the composition of the lithium-based positive electrode active material represented by General Formula (2) described above and other lithium-based positive electrode active materials include $Li_{1.0}Ni_{0.8}Co_{0.2}O_2$, $Li_{1.0}Ni_{0.5}Mn_{0.5}O_2$, $Li_{1.00}Ni_{0.35}Co_{0.34}Mn_{0.34}O_2$ (NCM111), $Li_{1.00}Ni_{0.52}Co_{0.20}Mn_{0.30}O_2$ (NCM523), $Li_{1.00}Ni_{0.50}Co_{0.30}Mn_{0.20}O_2$ (NCM532), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), $Li_{1.00}Ni_{0.85}Co_{0.15}Al_{0.05}O_2$ (NCA811), $LiCoO_2$ (LCO), and $LiFePO_4$ (LFP).

In addition, the positive electrode active material may contain a plurality of different kinds of lithium-based positive electrode active materials, and, for example, the positive electrode active material may contain a plurality of $LiNi_xCo_yMn_ZO_2$ (x, y, and z are the same as in the above-described specific examples) having different compositions among the above-described lithium-based positive electrode active materials, or may contain $LiNi_xCo_yMn_ZO_2$ (x, y, and z are as shown in the specific examples discussed above) and $LiNi_xCo_yAl_ZO_2$ (x, y, and z are as shown in the above-described specific examples).

The amount of the positive electrode active material contained in the electrode mixture is appropriately selected based on the use of the electrode mixture, and the amount is preferably 40 mass% or more and 99.9 mass% or less with respect to the total amount of the solid content derived from the binder, the positive electrode active material, and the conductive auxiliary. With the amount of the positive electrode active material in the above-described range, for example, a

sufficient charge/discharge capacity is obtained, facilitating good battery performance.

On the other hand, even when the binder is mixed with the above-described positive electrode active material, particularly a positive electrode active material containing a relatively large amount of Ni, gelation hardly occurs. In addition, the binder exhibits high adhesiveness to the positive electrode active material and the like. Thus, the proportion of the solid content derived from the binder (total amount excluding components volatilized during curing) with respect to the total amount of the solid content derived from the binder, the active material, and the conductive auxiliary, for example, can be made to 0.2 mass% or more and 20 mass% or less. The amount of the solid content derived from the binder is more preferably 0.2 mass% or greater and 10 mass% or less, and even more preferably 0.2 mass% or greater and 4 mass% or less.

In addition, the conductive auxiliary contained in the electrode mixture is not particularly limited as long as it is a compound that can increase electrical conductivity between the positive electrode active materials or between the positive electrode active material and the current collector. Examples of the conductive auxiliary include acetylene black, Ketjen Black, carbon black, graphite powder, graphene, carbon nanofibers, carbon nanotubes, and carbon fibers.

The amount of the conductive auxiliary contained in the electrode mixture is appropriately selected based on the type of conductive auxiliary and the like. From the viewpoint of increasing both the improvement of the conductivity and the dispersibility of the conductive auxiliary, the amount of the conductive auxiliary is preferably 0.1 mass% and 15 mass% or less, more preferably 0.1 mass% or more and 7 mass% or less, and even more preferably 0.1 mass% or more and 5 mass% or less relative to the total amount of the solid content derived from the binder, the positive electrode active material, and the conductive auxiliary.

The electrode mixture may contain a solvent and/or the like different from the nonaqueous solvent contained in the binder described above. The solvent can be selected from the nonaqueous solvents that can be contained in the binder described above.

The total amount of the solvent (including the amount of the nonaqueous solvent in the binder) in the electrode mixture is not particularly limited but typically is preferably 20 parts by mass or greater and 150 parts by mass or less per 100 parts by mass of the active material described above.

The electrode mixture may further contain a dispersant, an adhesion aid, a thickener, and/or the like, and a known compound can be used for these. The amount thereof is not particularly limited as long as the object and effects of the present invention are not impaired, but the amount is preferably 15 mass% or less with respect to the total amount of the solid content derived from the binder and the active material.

Furthermore, the electrode mixture may further contain an additive, such as a phosphorus compound, a sulfur compound, an organic acid, an amine compound, and a nitrogen compound such as an ammonium compound; an organic ester, a silane-based, titanium-based, and aluminum-based coupling agent of various types; and/or a vinylidene fluoride polymer other than the vinylidene fluoride polymer described above, and a resin, such as poly(tetrafluoroethylene) (PTFE), styrene-butadiene rubber (SBR), and polyacrylonitrile (PAN). These are not particularly limited as long as the object and effects of the present invention are not impaired, and the amount is preferably 15 mass% or less with respect to the total amount of the solid content derived from the binder and the positive electrode active material.

The electrode mixture may be prepared by mixing all the components at once, or may be prepared by mixing some of the components first and then mixing the remaining components.

A viscosity of the electrode mixture is not particularly limited as long as it can prevent dripping, uneven application, and delay in drying after application when the electrode mixture is applied, thereby forming an electrode mixture layer, and the workability of electrode mixture layer preparation and the coatability are good. Typically, the viscosity (slurry viscosity) measured at 20°C at a rotational speed of 6 rpm using a B-type viscometer is preferably 100 mPa·s or more and 100000 mPa·s or less, more preferably 1000 mPa·s or more and 80000 mPa·s or less, and particularly preferably 2000 mPa·s or more and 70000 mPa·s or less. The viscosity (slurry viscosity) of the electrode mixture in the present description is a value measured at 2 minutes after start of the rotation of the B-type rotational viscometer.

## 3. Electrode

The electrode (positive electrode) of the lithium-ion secondary battery of the present invention may include an electrode mixture layer including the electrode mixture described above and is, for example, a structure having a current collector and the electrode mixture layer described above disposed on the current collector.

• Current collector

A current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by forming a layer containing carbon black or the like on a surface of another medium, or one produced by applying the metal foil, metal mesh, or the like on a surface of a

medium.

· Electrode mixture layer

An electrode mixture layer is a layer formed by applying a composition (for example, the electrode mixture described above) containing a binder and a positive electrode active material onto a current collector and drying the composition. The electrode mixture layer may be formed only on one surface of the current collector and is preferably disposed on both surfaces.

The electrode mixture layer contains at least some solid content (vinylidene fluoride polymer) derived from the binder and the active material, and further contains various additives such as a conductive auxiliary, a dispersant, an adhesion aid, and a thickener as necessary. These additives may be the same as those described for the electrode mixture.

Here, the thickness of the electrode mixture layer is not particularly limited and is preferably 1 μm or more and 1000 μm or less in one example. In addition, the areal weight of the electrode mixture layer formed on one surface of the current collector is not particularly limited and can be any areal weight but is preferably 50 $g/m^2$ or more and 1000 $g/m^2$ or less and more preferably 100 $g/m^2$ or more and 500 $g/m^2$ or less in one example.

The above-mentioned electrode mixture layer can be formed by performing a step of applying the electrode mixture described above onto the current collector and a step of drying the electrode mixture.

The method of applying the electrode mixture is not particularly limited, and a doctor blade method, a reverse roll method, a comma bar method, a gravure method, an air knife method, a die coating method, a dip coating method, or the like can be employed.

After the application of the electrode mixture, the electrode mixture is heated at any temperature to dry the nonaqueous solvent. In one example, a drying temperature is preferably 60°C or higher and 500°C or lower, and more preferably 80°C or higher and 200°C or lower. The heating may be performed multiple times at different temperatures. The solvent in the mixture may be dried under atmospheric pressure, increased pressure, or reduced pressure. After the drying, a heat treatment may be further performed.

After the application and drying of the electrode mixture, press treatment may be further performed. Performing the press treatment can improve the electrode density. In one example, a pressing pressure is preferably 1 kPa or greater and 10 GPa or less.

4. Lithium-ion secondary battery

As described above, the binder and the electrode mixture can be used for forming an electrode (positive electrode) of a lithium-ion secondary battery or the like, and may be used for forming another layer of the lithium-ion secondary battery.

[Examples]

Hereinafter, specific examples of the present invention will be described together with comparative examples, but the present invention is not limited to these.

1. Measurement method and evaluation method of physical properties

In Examples and Comparative Examples described later, the inherent viscosity of the vinylidene fluoride polymer was measured by the following method. A peel strength test of the electrode and a viscosity ratio test were performed according to the following procedure.

• Inherent viscosity

The inherent viscosity of a vinylidene fluoride polymer was measured as follows. First, 80 mg of the vinylidene fluoride polymer was dissolved in 20 mL of N,N-dimethylformamide, and the viscosity was measured by using an Ubbelohde viscometer in a 30°C thermostatic bath. Based on the obtained value, the inherent viscosity ($\eta_i$) of the vinylidene fluoride polymer was then calculated based on the following equation:

$$\eta_i = (1/C)\cdot\ln(\eta/\eta_0)$$

In the equation, $\eta$ is a viscosity of the solution, $\eta_0$ is a viscosity of N,N-dimethylformamide alone, which is a solvent, C is a

concentration of the vinylidene fluoride polymer in the solution, that is, 0.4 g/dL.

· Peel strength test of electrode

The electrodes produced in Examples and Comparative Examples described later were cut into a length of 100 mm and a width of 20 mm. Then, a 90° peel test was conducted at a head speed of 10 mm/min in accordance with JIS F6854-1 using a tensile tester (ORIENTE CHSIA-1150 available from UNIVERSAL TESTING MACHINE) to measure the peel strength.

· Viscosity ratio test

(1) Preparation of slurry

The electrode active material NCA811 ($Li_{1.00}Ni_{0.85}Co_{0.15}Al_{0.05}O_2$) described later and carbon black (SP: Super P (trade name) available from Timcal Japan K.K., average particle size: 40 nm, specific surface area: 60 $m^2/g$) were added, and the powders were mixed.
Meanwhile, the vinylidene fluoride polymer in the binder used in each Example or Comparative Example was dissolved in N-methyl-2-pyrrolidone (hereinafter, also referred to as "NMP") described later to prepare a solution containing 6 mass% of a resin component (vinylidene fluoride polymer) of the binder. Then, the vinylidene fluoride polymer solution was added to a mixture of NCA811 and carbon black, and kneading was performed. Specifically, the solution was added to give a solid content concentration of 81.5 mass%, and primary kneading was performed at 2000 rpm for 2.5 minutes. Subsequently, the remaining solution and NMP were added to set the solid content concentration to 75 mass%. Then, secondary kneading was performed at 2000 rpm for 3 minutes to obtain a slurry. After the primary kneading and the secondary kneading, cooling was performed until the slurry temperature reached 40°C. The slurry was adjusted in an environment of 22°C and a dew point of -30°C or higher and -40°C or lower. The mass ratio of the electrode active material, the carbon black, and the vinylidene fluoride polymer in the obtained slurry is 100:2:2 in this order.

(2) Measurement of viscosity

The obtained slurry was measured at a shear rate of 2 $s^{-1}$ under an environment of 25°C and a dew point of -30°C or higher and -40°C or less using an E-type viscometer. The viscosity was measured by loading the slurry onto a measuring device, waiting for 60 seconds, and then rotating the rotor. In addition, a value obtained after 300 seconds from the start of rotation of the rotor was used as the viscosity of the slurry.

(3) Storage of slurry

Each slurry was stored at 25°C under a nitrogen atmosphere for 2 weeks. The dew point of the storage environment was set to -30°C or higher and -40°C or lower.

(4) Measurement of viscosity

The viscosity of the slurry after storage for 2 weeks was measured at a shear rate of 2 $s^{-1}$ under an environment of 25°C and a dew point of -30°C or higher and -40°C or less using an E-type viscometer. The viscosity was measured in the same manner as described above.

(5) Calculation of viscosity ratio

From the viscosity measured in (2) described above and the viscosity measured in (4) described above, the viscosity ratio was calculated based on the following equation:

Viscosity ratio (%) = (slurry viscosity after storage)/(slurry viscosity immediately after preparation) $\times$ 100

2. Raw material

For the preparation of the vinylidene fluoride polymer described later, the following materials were used.

- · VDF: vinylidene fluoride
- · CEA: carboxyethyl acrylate

· CMA: carboxymethyl acrylate
· APOPA: 3-((3-(acryloyloxy) propanoyl)oxy) propanoic acid
· APOPOPA: 3-((3-(acryloyloxy) propanoyl)oxy) propanoyl)oxy) propanoic acid
· AA: acrylic acid
· APS: acryloyloxypropylsuccinic acid

The following components were used for the preparation of the electrode and the slurry preparation described above.

· NCA811 (average particle size of aqueous dispersion measured by laser diffraction/diffusion method: 12.5 μm, specific surface area measured by BET 1-point method: 0.24 $m^2/g$, pH measured by the above-described method: 11.6)
· N-methyl-2-pyrrolidone (water content: less than 500 ppm)
· Carbon black: Super P (trade name) available from Timcal Japan K.K., average particle size measured by electron microscope analysis: 40 nm, specific surface area measured by BET 1-point method: 60 $m^2/g$

3. Preparation of binder and electrode

(1) Preparation of vinylidene fluoride polymer

[Preparation of vinylidene fluoride polymer A]

In an autoclave having a content volume of 2 liters, 1240 g of ion-exchanged water, 0.4 g of Metolose 90SH-100 (available from Shin-Etsu Chemical Co., Ltd.), 2.2 g of a 50 mass% diisopropyl peroxydicarbonate-freon 225cb solution, 396 g of vinylidene fluoride, and 0.4 g of a monomer mixture A (CEA/APOPA/APOPOPA = 0.4/0.5/0.1 (mass ratio)) were charged, and then heated to 45°C. Next, a 5 mass% aqueous monomer mixture A solution was continuously supplied to the reaction vessel at an average flow rate of 0.75 g/min while maintaining 45°C. The obtained polymer slurry was dehydrated and dried to obtain a vinylidene fluoride polymer A (VDF/CEA/APOPA/APOPOPA,). The monomer mixture A was added in a total amount of 4.0 g including the initially added amount.

[Preparation of vinylidene fluoride polymer B]

In an autoclave having a content volume of 2 liters, 1248 g of ion-exchanged water, 0.5 g of Metolose 90SH-100 (available from Shin-Etsu Chemical Co., Ltd.), 0.48 g of a 50 mass% diisopropyl peroxydicarbonate-freon 225cb solution, 396 g of vinylidene fluoride, and 0.4 g of a monomer mixture B (AA/CEA/APOPA/APOPOPA = 0.2/0.3/0.4/0.1 (mass ratio)) were charged, and then heated to 45°C. Next, a 5 mass% aqueous monomer mixture B solution was continuously supplied to the reaction vessel at a flow rate of 0.3 g/min while maintaining 45°C. The obtained polymer slurry was dehydrated and dried to obtain a vinylidene fluoride polymer B (VDF/AA/CEA/APOPA/APOPOPA). The monomer mixture B was added in a total amount of 4.0 g including the initially added amount.

[Preparation of vinylidene fluoride polymer C]

In an autoclave having a content volume of 2 liters, 1248 g of ion-exchanged water, 0.4 g of Metolose 90SH-100 (available from Shin-Etsu Chemical Co., Ltd.), 2.0 g of a 50 mass% diisopropyl peroxydicarbonate-freon 225cb solution, 396 g of vinylidene fluoride, and 0.2 g of AA were charged, and then heated to 45°C. Next, a 5 mass% aqueous AA solution was continuously supplied to the reaction vessel at a flow rate of 0.5 g/min while maintaining 45°C. The obtained polymer slurry was dehydrated and dried to obtain a vinylidene fluoride polymer C (VDF/AA). AA was added in a total amount of 4.0 g including the initially added amount.

[Preparation of vinylidene fluoride polymer D]

In an autoclave having a content volume of 2 liters, 1248 g of ion-exchanged water, 0.4 g of Metolose 90SH-100 (available from Shin-Etsu Chemical Co., Ltd.), 2.2 g of a 50 mass% diisopropyl peroxydicarbonate-freon 225cb solution, 396 g of vinylidene fluoride, and 0.4 g of CEA were charged, and then heated to 45°C. Next, a 5 mass% aqueous CEA solution was continuously supplied to the reaction vessel at a flow rate of 0.8 g/min while maintaining 45°C. The obtained polymer slurry was dehydrated and dried to obtain a vinylidene fluoride polymer D (VDF/CEA). CEA was added in a total amount of 4.0 g including the initially added amount.

[Preparation of vinylidene fluoride polymer E]

In an autoclave having a content volume of 2 liters, 1224 g of ion-exchanged water, 0.4 g of Metolose 90SH-100 (available from Shin-Etsu Chemical Co., Ltd.), 2.2 g of a 50 mass% diisopropyl peroxydicarbonate-freon 225cb solution, 396 g of vinylidene fluoride, and 0.4 g of APS were charged, and then heated to 45°C. Next, a 5 mass% aqueous monomer mixture F (APS/AA=0.7/0.2 (mass ratio)) solution was continuously supplied to the reaction vessel at a flow rate of 0.45 g/min while maintaining 45°C. The obtained polymer slurry was dehydrated and dried to obtain a vinylidene fluoride copolymer E (VDF/APS/AA).

[Preparation of vinylidene fluoride polymer F]

In an autoclave having a content volume of 2 liters, 1212 g of ion-exchanged water, 0.4 g of Metolose 90SH-100 (available from Shin-Etsu Chemical Co., Ltd.), 2.4 g of a 50 mass% diisopropyl peroxydicarbonate-freon 225cb solution, 396 g of vinylidene fluoride, 0.05 g of CEA, and 0.1 g of CMA were charged, and then heated to 45°C. Next, a 5 mass% aqueous monomer mixture G (CEA/CMA=1/2 (mass ratio)) solution was continuously supplied to the reaction vessel at a flow rate of 0.5 g/min while maintaining 45°C. The obtained polymer slurry was dehydrated and dried to obtain a vinylidene fluoride copolymer F (VDF/CEA/CMA).

[Preparation of vinylidene fluoride polymer G]

In an autoclave having a content volume of 2 liters, 1222 g of ion-exchanged water, 0.4 g of Metolose 90SH-100 (available from Shin-Etsu Chemical Co., Ltd.), 2.2 g of a 50 mass% diisopropyl peroxydicarbonate-freon 225cb solution, 396 g of vinylidene fluoride, and 0.4 g of CMA were charged, and then heated to 45°C. Next, a 5 mass% aqueous CMA solution was continuously supplied to the reaction vessel at a flow rate of 0.6 g/min while maintaining 45°C. The obtained polymer slurry was dehydrated and dried to obtain a vinylidene fluoride copolymer G (VDF/CMA).

(2) Preparation of electrode mixture and production of electrode

Example 1

Carbon black (SP: Super P (trade name) available from Timcal Japan K.K., average particle size: 40 nm, specific surface area: 60 $m^2/g$) as the conductive auxiliary was added to the electrode active material NCA811, and the powders were mixed.

The vinylidene fluoride polymer A (binder) was dissolved in NMP to prepare a vinylidene fluoride polymer solution containing 8 mass% of the vinylidene fluoride polymer A. Then, NMP was added to a mixture of NCA811 and carbon black, and kneading was performed. Specifically, the vinylidene fluoride polymer solution was added so that the solid content concentration was 83.7 mass%, and primary kneading was performed at 2000 rpm for 4 minutes. Then, a vinylidene fluoride polymer solution was further added to set the solid content concentration to 73.5 mass%, and secondary kneading was performed at 2000 rpm for 3 minutes to obtain an electrode mixture.

The obtained electrode mixture was applied onto a 15 μm thick aluminum foil as a current collector with a bar coater, and this was subjected to primary drying at 110°C for 30 minutes in a nitrogen atmosphere in a thermostat. Then, secondary drying was performed at 130°C for 2 hours under a nitrogen atmosphere to obtain an electrode (electrode peeling measurement sample) having an areal weight of about 250 $g/m^2$. The mass ratio of the electrode active material, the carbon black, and the vinylidene fluoride polymer in the obtained electrode mixture is 100:2:1.5 in this order.

Example 2

An electrode mixture and an electrode were obtained in the same manner as in Example 1 except that the binder was changed to the vinylidene fluoride polymer B.

Example 3

An electrode mixture and an electrode were obtained in the same manner as in Example 1 except that the binder was changed to the vinylidene fluoride polymer F.

Comparative Example 1

An electrode mixture and an electrode were obtained in the same manner as in Example 1 except that the binder

was changed to KF#7300 available from KUREHA CORPORATION.

Comparative Example 2

An electrode mixture and an electrode were obtained in the same manner as in Example 1 except that the binder was changed to a blend of the vinylidene fluoride polymer C and the vinylidene fluoride polymer D at a weight ratio of 3:7.

Comparative Example 3

An electrode mixture and an electrode were obtained in the same manner as in Example 1 except that the binder was changed to the vinylidene fluoride polymer C.

Comparative Example 4

An electrode mixture and an electrode were obtained in the same manner as in Example 1 except that the binder was changed to the vinylidene fluoride copolymer D.

Comparative Example 5

An electrode mixture and an electrode were obtained in the same manner as in Example 1 except that the binder was changed to the vinylidene fluoride copolymer E.

Comparative Example 6

An electrode mixture and an electrode were obtained in the same manner as in Example 1 except that the binder was changed to a blend of the vinylidene fluoride polymer D and the vinylidene fluoride polymer G at a weight ratio of 4:6.

[Table 1]

| | Vinylidene fluoride polymer<br>Binder | Comonomer<br>(Mass ratio) | The number of structural units represented by Formula (1) | Inherent viscosity (dL/g) | Peel strength (gf/mm) | Viscosity ratio (%) |
|---|---|---|---|---|---|---|
| Example 1 | A (VDF: 99 parts by mass) | CEA/APOPA/APOPOPA (0.4/0.5/0.1) | 3 | 2.6 | 7.4 | 33 |
| Example 2 | B (VDF: 99 parts by mass) | AA/CEA/APOPA/APOPOPA (0.2/0.3/0.4/0.1) | 4 | 2.5 | 7.6 | 8 |
| Example 3 | F (VDF: 99 parts by mass) | CEA/CMA (0.4/0.6) | 2 | 2.7 | 8.9 | 34 |
| Comparative Example 1 | VDF: 100 parts by mass | - | 0 | 3.1 | 5.6 | (Gelation) |
| Comparative Example 2 | C + D (VDF: 99 parts by mass) | AA (0.3) + CEA (0.7) (Blend) | 1, 1 | 2.6 | 7.4 | 272 |
| Comparative Example 3 | C (VDF: 99 parts by mass) | AA | 1 | 2.5 | 5.2 | 154 |
| Comparative Example 4 | D (VDF: 99 parts by mass) | CEA | 1 | 2.5 | 7.4 | 171 |
| Comparative Example 5 | E (VDF: 99 parts by mass) | APS/AA (0.8/0.2) | 1 | 2.5 | 6.4 | 664 |
| Comparative Example 6 | D + G (VDF: 99 parts by mass) | CEA (0.4) + CMA (0.6) (Blend) | 1, 1 | 2.8 | 6.0 | 211 |

As indicated in Table 1 described above, when a vinylidene fluoride polymer including a structural unit derived from vinylidene fluoride and two or more kinds of structural units having a carboxy group was contained in the binder, the peeling strength was high, and the gelation resistance was good (Examples 1 to 3).

On the other hand, when a homopolymer of vinylidene fluoride was used for a binder, the peeling strength and the gelation resistance were low (Comparative Example 1). When a vinylidene fluoride polymer including the structural unit derived from vinylidene fluoride and only one structural unit having a carboxy group was contained in the binder, although the peeling resistance was improved, the viscosity ratio was more than 100%, and the gelation resistance was low (Comparative Examples 3 to 5). In addition, even when two vinylidene fluoride polymers including a structural unit derived from vinylidene fluoride and only one structural unit having a carboxy group were mixed, the gelation resistance was low (Comparative Examples 2 and 6).

The present application claims priority from the Japanese patent application No. 2022-049941 filed on March 25, 2022. The contents described in the specification of the foregoing application are all incorporated in the specification of the present application by reference.

[Industrial Applicability]

The binder of the present invention hardly deteriorates or thickens even when mixed with a positive electrode active material containing a large amount of nickel. The binder has good adhesive strength even in a small amount. Therefore, the binder, the electrode mixture containing the binder, and the electrode are very useful for manufacturing a lithium-ion secondary battery.

## Claims

**1.** A binder for a positive electrode of a lithium-ion secondary battery, the binder comprising a vinylidene fluoride polymer, the vinylidene fluoride polymer including a structural unit derived from vinylidene fluoride and two or more kinds of structural units having a carboxy group, wherein
a slurry has a viscosity ratio of 100% or less as determined by the following method:
[method of determining viscosity ratio of slurry]

(1) preparing a slurry consisting of an electrode active material NCA811, carbon black, the vinylidene fluoride polymer in the binder, and N-methyl-2-pyrrolidone, the slurry having a mass ratio of the electrode active material, the carbon black, and the vinylidene fluoride polymer in the binder of 100:2:2 and a solid content concentration of 75 mass%;
(2) measuring a viscosity of the slurry using an E-type viscometer at 25°C and a shear rate of 2 $s^{-1}$;
(3) storing the slurry at 25°C under a nitrogen atmosphere for 2 weeks;
(4) measuring the viscosity of the slurry after storage using the E-type viscometer at 25°C and a shear rate of 2 $s^{-1}$; and
(5) calculating a viscosity ratio of the slurry based on the following equation:

viscosity ratio (%) = (slurry viscosity after storage)/(slurry viscosity immediately after preparation) × 100.

**2.** The binder according to claim 1, wherein the vinylidene fluoride polymer includes a structural unit derived from vinylidene fluoride and three or more kinds of structural units having a carboxy group.

**3.** The binder according to claim 1 or 2, wherein in the vinylidene fluoride polymer, when all structural units are defined as 100 mass%, a total amount of the structural units having a carboxy group is 0.1 mass% or more and 2 mass% or less.

**4.** An electrode mixture, comprising:

the binder according to any one of claims 1 to 3; and
a positive electrode active material.

**5.** The electrode mixture according to claim 4, wherein the positive electrode active material comprises a compound represented by General Formula (2):

$LiM_xO_2$ ... (2)

where in General Formula (2), M represents at least one kind of metal element including Ni, and when a total of the metal elements represented by M is defined as 100 mol%, a proportion of Ni is 55 mol% or more, and $0.5 \leq x \leq 1.5$.

**6.** An electrode in which an electrode mixture layer comprising the electrode mixture according to claim 4 or 5 is provided on a current collector.

**7.** A lithium-ion secondary battery comprising the electrode according to claim 6.

**INTERNATIONAL SEARCH REPORT**

International application No.
**PCT/JP2023/011009**

**A. CLASSIFICATION OF SUBJECT MATTER**

***H01M 4/62***(2006.01)i; ***H01M 4/525***(2010.01)i
FI: H01M4/62 Z; H01M4/525

According to International Patent Classification (IPC) or to both national classification and IPC

**B. FIELDS SEARCHED**

Minimum documentation searched (classification system followed by classification symbols)

H01M4/62; H01M4/525

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-192136 A (ASAHI KASEI CORP.) 06 October 2014 (2014-10-06) examples 1, 2, table 1 | 1, 4-7 |
| X | WO 2019/239781 A1 (KUREHA CORP.) 19 December 2019 (2019-12-19) claim 1, example 6, table 1 | 1, 3-7 |
| Y | | 2 |
| Y | WO 2018/008262 A1 (KUREHA CORP.) 11 January 2018 (2018-01-11) paragraphs [0009], [0034] | 2 |
| Y | JP 2012-219125 A (KUREHA CORP.) 12 November 2012 (2012-11-12) paragraphs [0007], [0026] | 2 |
| A | WO 2019/087652 A1 (DAIKIN INDUSTRIES, LTD.) 09 May 2019 (2019-05-09) entire text, all drawings | 1–7 |
| A | JP 2018-195552 A (DAIKIN INDUSTRIES, LTD.) 06 December 2018 (2018-12-06) entire text, all drawings | 1–7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/011009**

**C. DOCUMENTS CONSIDERED TO BE RELEVANT**

| Category* | Citation of document, with indication, where appropriate, of the relevant passages | Relevant to claim No. |
|---|---|---|
| A | JP 2017-188203 A (SUMITOMO METAL MINING CO., LTD.) 12 October 2017 (2017-10-12) entire text, all drawings | 1–7 |

Form PCT/ISA/210 (second sheet) (January 2015)

**INTERNATIONAL SEARCH REPORT**
**Information on patent family members**

International application No.
**PCT/JP2023/011009**

| Patent document cited in search report | Publication date (day/month/year) | Patent family member(s) | Publication date (day/month/year) |
|---|---|---|---|
| JP 2014-192136 A | 06 October 2014 | (Family: none) | |
| WO 2019/239781 A1 | 19 December 2019 | EP 3809500 A1<br>claim 1, example 6, table 1<br>CN 112189271 A<br>KR 10-2021-0013153 A | |
| WO 2018/008262 A1 | 11 January 2018 | US 2020/0235401 A1<br>paragraphs [0009], [0032]<br>EP 3483962 A1<br>KR 10-2018-0132784 A<br>CN 109075344 A | |
| JP 2012-219125 A | 12 November 2012 | CN 102731707 A<br>KR 10-2012-0113659 A | |
| WO 2019/087652 A1 | 09 May 2019 | US 2020/0243862 A1<br>entire text, all drawings<br>EP 3680969 A1 | |
| JP 2018-195552 A | 06 December 2018 | US 2019/0296359 A1<br>entire text, all drawings<br>WO 2018/066430 A1<br>EP 3447831 A1 | |
| JP 2017-188203 A | 12 October 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012090876 A
- JP 2022049941 A